# FASCICULE DE BREVET EUROPEEN

(11) **EP 3 516 483 B1**
(45) Date de publication et mention de la délivrance du brevet: **19.03.2025**
(21) Numéro de dépôt: 17783935.4
(22) Date de dépôt: 21.09.2017
(51) Int. Cl.: G06F 3/01, G05G 5/03, G05G 9/047, G06F 3/0338, G01L 5/16, G01L 5/22

(54) **INTERFACE HAPTIQUE A AU MOINS DEUX DEGRES DE LIBERTE PRESENTANT UN RESSENTI HAPTIQUE AMELIORE**
HAPTISCHE SCHNITTSTELLE MIT MINDESTENS ZWEI FREIHEITSGRADEN MIT VERBESSERTEM HAPTISCHEM EMPFINDEN
HAPTIC INTERFACE OF AT LEAST TWO DEGREES OF FREEDOM AND PROVIDING AN IMPROVED HAPTIC FEEDBACK

(30) Priorité: 21.09.2016 FR 1658875
(43) Date de publication de la demande: 31.07.2019
(73) Titulaire: Commissariat à l'Energie Atomique et aux Energies Alternatives, 75015 Paris (FR)
(72) Inventeur: ECK, Laurent, 28410 Saint Lubin de La Haye (FR); LEROY, Edouard, 1006 Lausanne (CH); CHANGEON, Gwenaël, 75014 Paris (FR)
(74) Mandataire: Brevalex
(86) Numéro de dépôt international: PCT/FR2017/052539
(87) Numéro de publication internationale: WO 2018/055296

(56) Documents cités:
- WO-A1-2016/050717
- WO-A1-2016/050717
- US-A- 5 767 839
- US-A- 5 767 839
- US-A1- 2001 052 893
- US-A1- 2001 052 893
- US-A1- 2005 156 892
- US-A1- 2005 156 892
- US-A1- 2006 176 272
- US-B1- 7 061 466
- US-B1- 7 061 466
- BIN LIU: "Development of 2-DOF haptic devices working with magnetorheological fluids", 5 March 2006 (2006-03-05), Wollongong, Australia, XP055424642, Retrieved from the Internet <URL:http://ro.uow.edu.au/cgi/viewcontent.cgi?filename=0&article=1136&context=theses&type=additional> [retrieved on 20171114]
- ANDRZEJ MILECKI ET AL: "Control of a small robot by haptic joystick with magnetorheological fluid", 31 January 2011 (2011-01-31), XP055423162, Retrieved from the Internet <URL:https://www.researchgate.net/profile/Pawel_Bachman/publication/247158668_Control_of_a_small_robot_by_haptic_joystick_with_magnetorheological_fluid/links/00b4951dbc477244fa000000/Control-of-a-small-robot-by-haptic-joystick-with-magnetorheological-fluid.pdf> [retrieved on 20171109]
- TATSUYA KOYAMA ET AL: "Development of an Ultrasonic Brake", JOURNAL OF ADVANCED MECHANICAL DESIGN, SYSTEMS, AND MANUFACTURING, vol. 1, no. 1, 1 January 2007 (2007-01-01), pages 122 - 129, XP055423179, DOI: 10.1299/jamdsm.1.122
- BIN LIU: "Development of 2-DOF haptic devices working with magnetorheological fluids", 5 March 2006 (2006-03-05), Wollongong, Australia, XP055424642, Retrieved from the Internet <URL:http://ro.uow.edu.au/cgi/viewcontent.cgi?filename=0&article=1136&context=theses&type=additional> [retrieved on 20171114]
- ANDRZEJ MILECKI ET AL: "Control of a small robot by haptic joystick with magnetorheological fluid", 31 January 2011 (2011-01-31), XP055423162, Retrieved from the Internet <URL:https://www.researchgate.net/profile/Pawel_Bachman/publication/247158668_Control_of_a_small_robot_by_haptic_joystick_with_magnetorheological_fluid/links/00b4951dbc477244fa000000/Control-of-a-small-robot-by-haptic-joystick-with-magnetorheological-fluid.pdf> [retrieved on 20171109]
- TATSUYA KOYAMA ET AL: "Development of an Ultrasonic Brake", JOURNAL OF ADVANCED MECHANICAL DESIGN, SYSTEMS, AND MANUFACTURING, vol. 1, no. 1, 1 January 2007 (2007-01-01), pages 122 - 129, XP055423179, DOI: 10.1299/jamdsm.1.122

## Description

### DOMAINE TECHNIQUE ET ÉTAT DE LA TECHNIQUE ANTÉRIEURE

La présente invention se rapporte à une interface haptique à au moins deux degrés de liberté présentant un ressenti haptique amélioré.

Une interface haptique peut être utilisée pour commander ou contrôler un système tel que différents dispositifs dans un véhicule automobile, comme par exemple un système de climatisation et un système de géolocalisation. Une interface haptique est particulièrement intéressante lorsque l'utilisateur doit garder son attention, notamment visuelle, sur l'environnement par exemple lorsqu'il conduit.

L'interface haptique comporte un effecteur, également appelé joystick, à deux degrés de liberté. Un effort résistant s'oppose au déplacement de l'effecteur en fonction par exemple de sa position. En modulant l'effort résistant en fonction de la position de l'effecteur, il est possible de définir des motifs haptiques qui seront ressentis par l'utilisateur lorsqu'il déplace l'effecteur.

On cherche notamment à réaliser des interfaces haptique dont l'effecteur ou élément d'interaction avec l'utilisateur offre au moins deux degrés de liberté. Afin d'améliorer le ressenti haptique de l'utilisateur on souhaite pouvoir assurer un bon guidage de l'effecteur selon des trajectoires complexes, par exemple selon des directions radiales ou selon un cercle dans le plan de l'effecteur.

Un tel guidage est réalisable dans le cas d'une interface haptique active qui comporte un ou plusieurs moteurs électriques. En effet les moteurs peuvent être aisément commandés pour générer des efforts et/ou des déplacements afin de guider l'effecteur. La commande des moteurs est faite à partir des informations fournies par le ou les capteurs de position.

Cependant ce type d'interface est généralement encombrant du fait des moteurs électriques, présente un coût relativement important et peut parfois se révéler dangereux pour l'utilisateur puisqu'il peut générer un effort ou un déplacement inopiné pouvant blesser l'utilisateur. En outre, il peut présenter des problèmes d'instabilité rendant son contrôle complexe.

Les interfaces haptiques passives ne peuvent générer qu'un effort résistant s'opposant à un effort appliqué par l'utilisateur au moyen de freins. Une interface haptique passive peut par exemple comporter un ou plusieurs freins magnétorhéologiques, chaque frein comportant un fluide magnétorhéologique dont la viscosité apparente est modifiée par l'application d'un champ magnétique afin de définir les motifs haptiques prédéfinis.

Un exemple d'interface haptique à deux degrés de liberté est par exemple décrit dans le document US7061466B1. Elle comporte deux freins électromagnétiques comportant chacun un arbre disposé perpendiculairement l'un par rapport à l'autre. Une manette est connectée mécaniquement aux deux arbres au moyen d'une connexion à cardans de sorte que les deux freins soient assemblés en parallèle. Des capteurs de position sont prévus pour mesurer la position de la manette dans les deux degrés de liberté. Les freins électromagnétiques sont commandés en fonction de la position et de motifs haptiques préenregistrés.

Un autre exemple est décrit dans le document US 2006/176272 A1. Le document décrit un système comportant une interface utilisateur, manipulable, et un ordinateur distant. Il s'agit par exemple d'une manette de jeu. L'interface utilisateur est pourvue d'un processeur local, séparé de l'ordinateur distant. Le processeur local reçoit un signal de contrôle de la part de l'ordinateur (« host output control signal »), et fournit, à son tour, un signal de contrôle. Ce dernier est reçu par un actuateur et fournit en conséquence une force selon un degré de liberté à une manette (« user-manipulated object »), couplée à l'actuateur, en fonction du signal envoyé par le processeur. Un capteur détecte un mouvement de la manette selon le degré de liberté et renvoie un signal incluant une information représentative de la position et du mouvement de la manette. De préférence, ce signal est transmis au processeur local, qui communique ensuite un signal à l'ordinateur distant (cf. §[0012]), ou l'ordinateur reçoit le signal du capteur et détermine les valeurs des forces (cf. §[0013]). Le §[0013] du document ajoute que la manette peut être déplacée dans un, deux ou trois degrés de liberté en utilisant, par exemple, un mécanisme à cardan ou à étrier fendu, dans lequel un actionneur et un capteur peuvent être fournis pour chaque degré de liberté. L'actuateur peut être actif ou passif ; par exemple, les actuateurs actifs peuvent inclure des moteurs, des actionneurs pneumatiques/hydrauliques, des coupleurs, des bobines acoustiques, etc. Les actuateurs passifs peuvent inclure des freins, des amortisseurs de contrôleur de fluide, etc.

Le document WO 2016/050717 A1 décrit une interface haptique dans laquelle un arbre rotatif constitue à la fois l'élément d'interaction avec un utilisateur, mais également l'arbre du frein qui interagit directement avec un fluide dont la viscosité apparente varie en fonction d'un stimulus extérieur.

Les interfaces haptiques passives offrent les avantages d'être sûres et de coût réduit, mais elles ne permettent pas d'assurer un guidage de l'effecteur selon des trajectoires complexes qui ne sont pas suivant les axes des freins, offrant un bon ressenti haptique. Les freins sont commandés de sorte à interrompre le déplacement de la manette suivant l'une et/ou l'autre des directions contrôlées par les freins lorsque la position mesurée est en dehors de la zone de guidage, mais l'utilisateur doit alors exercer un effort du même ordre de grandeur que celui fourni par les freins pour se désengager de cette position, ce qui est nuisible au ressenti haptique. De plus le guidage offert par l'interface est tardif, l'effecteur étant déjà en dehors de la trajectoire.

### EXPOSÉ DE L'INVENTION

C'est par conséquent un but de la présente invention d'offrir une interface haptique à au moins deux degrés de liberté, offrant un ressenti haptique amélioré, notamment dans le guidage de l'effecteur suivant des trajectoires complexes.

Le but énoncé ci-dessus est atteint par une interface haptique selon la revendication 1. A partir de la connaissance de la position de l'effecteur et de la direction de l'effort exercé par l'utilisateur, l'unité de commande peut envoyer très tôt des ordres aux freins afin qu'ils génèrent rapidement ou non un effort résistant de sorte qu'il guide l'effecteur selon une trajectoire donnée.

La détection de la direction de l'effort permet de déterminer très tôt l'intention de l'utilisateur avant même qu'un déplacement ne soit détecté, elle permet alors de commander les freins au plus tôt. En outre la connaissance de la direction de l'effort permet une connaissance très fine de la direction que va suivre l'effecteur et permet donc une commande très fine des freins.

Dans la présente demande, on entend par « frein passif » un frein qui est apte uniquement à générer un effort résistant à l'encontre d'un effort exercé par l'utilisateur. Il n'est pas capable de générer un effort ou un déplacement en l'absence d'un effort extérieur. Par exemple, les freins magnétorhéologiques, électrorhéologiques, électromagnétiques, » sont des freins passifs. Des dispositifs utilisant le phénomène de lubrification active par vibrations pourraient également être utilisés, par exemple mettant en œuvre un système piézoélectrique.

De manière très avantageuse, on mesure l'amplitude de la force exercée par l'utilisateur sur l'effecteur, ce qui permet de moduler au mieux les efforts résistants générer par les freins, offrant un guidage plus souple.

Avantageusement, les moyens de détection de l'effort exercé par l'utilisateur sont disposés sur ou dans l'effecteur, offrant une mesure précise de l'effort. Il peut s'agir par exemple d'un capteur capacitif.

La présente invention a alors pour objet une interface haptique à au moins deux degrés de liberté comportant :
- au moins un élément d'interaction avec un utilisateur,
- au moins deux freins passifs s'étendant chacun le long d'un axe, chacun des freins étant apte à exercer un effort résistant autour de son axe, lesdits efforts étant commandables,
- des moyens de mesure d'une position de l'élément d'interaction avec un utilisateur,
- des moyens de détection de l'intention d'action de l'utilisateur sur l'élément d'interaction avec l'utilisateur
- une unité de commande apte à envoyer des ordres audits freins en fonction des informations sur la position de l'élément d'interaction avec l'utilisateur et sur de l'intention d'action de l'utilisateur, de sorte que lesdits freins passifs génèrent des efforts résistants selon au moins un motif haptique donné.

Les moyens de détection de l'intention d'action de l'utilisateur sur l'élément d'interaction avec l'utilisateur détectent la direction d'un effort appliqué sur l'élément d'interaction avec l'utilisateur. Les moyens de détection de l'intention d'action de l'utilisateur sur l'élément d'interaction avec l'utilisateur peuvent mesurer l'intensité de l'effort.

Les moyens de détection de l'intention d'action de l'utilisateur comportent au moins un capteur d'effort lié à l'élément d'interaction avec l'utilisateur. Le capteur d'effort peut être un capteur capacitif en contact avec l'élément d'interaction avec l'utilisateur et comporter au moins plusieurs condensateurs à capacité variable, dont la capacité varie en fonction au moins de la direction de l'effort appliqué sur l'élément d'interaction avec l'utilisateur.

Selon un autre exemple de réalisation, les moyens de détection de l'intention d'action de l'utilisateur sur l'élément d'interaction avec l'utilisateur comportent un capteur au niveau de chaque frein, lesdits capteurs étant apte à détecter les couples exercés autour de chacun des axes.

Par exemple, les freins passifs peuvent comporter un fluide dont la viscosité apparente varie en fonction d'un stimulus extérieur, par exemple un fluide magnétorhéologique, et un système de génération dudit stimulus extérieur sur commande dans ledit fluide, et un élément d'interaction avec le fluide disposé dans le fluide et connecté mécaniquement à l'élément d'interaction avec l'utilisateur.

Selon une caractéristique additionnelle, l'élément d'interaction avec l'utilisateur et les freins passifs sont connectés mécaniquement par une articulation à cardans.

L'interface haptique peut comporter des moyens de rappel magnétiques de l'élément d'interaction avec l'utilisateur dans une position repos.

La présente invention a également pour objet un procédé de commande d'une interface haptique selon l'invention, dans lequel, lorsque l'unité de commande applique un motif haptique de guidage de l'élément d'interaction avec l'utilisateur au moins le long d'un côté d'un plan donné, l'unité de commande :
- détermine la position de l'élément d'interaction avec l'utilisateur,
- détermine au moins la direction de l'effort appliqué sur l'élément d'interaction avec l'utilisateur
- envoie des ordres aux freins passifs de sorte que les efforts résistants générés incitent l'utilisateur à se rapprocher du plan.

L'intensité de l'effort appliqué sur l'élément d'interaction avec l'utilisateur est avantageusement mesurée et les intensités des efforts résistants appliqués par les freins passifs sont avantageusement dépendantes de l'intensité de l'effort.

L'élément d'interaction avec l'utilisateur peut n'être guidé que d'un côté du plan et les intensités des efforts résistants appliqués par les freins passifs peuvent être dépendantes de la position de l'élément d'interaction avec l'utilisateur par rapport au plan de sorte à fournir un ressenti haptique à l'utilisateur lors du franchissement du plan.

### BRÈVE DESCRIPTION DES DESSINS

La présente invention sera mieux comprise sur la base de la description qui va suivre et des dessins en annexe sur lesquels:
- la figure 1 est une représentation schématique d'un exemple d'interface haptique selon l'invention,
- la figure 2 est une représentation d'un exemple de guidage d'un effecteur pouvant être obtenu grâce à la présente invention,
- la figure 3A est une vue en perspective d'un exemple de réalisation d'une interface haptique selon l'invention,
- la figure 3B est une vue de détail de la figure 3A au niveau de la connexion à cardans,
- la figure 4 est une représentation schématique d'un effecteur muni d'un détecteur d'effort pouvant être mis en œuvre dans la présente invention,
- la figure 5 est une représentation graphique illustrant le guidage obtenu grâce à l'interface haptique selon l'invention,
- les figures 6A et 6B sont des représentations schématiques d'autres exemples de réalisation d'interfaces haptiques à deux degrés de liberté selon l'invention.

### EXPOSÉ DÉTAILLÉ DE MODES DE RÉALISATION PARTICULIERS

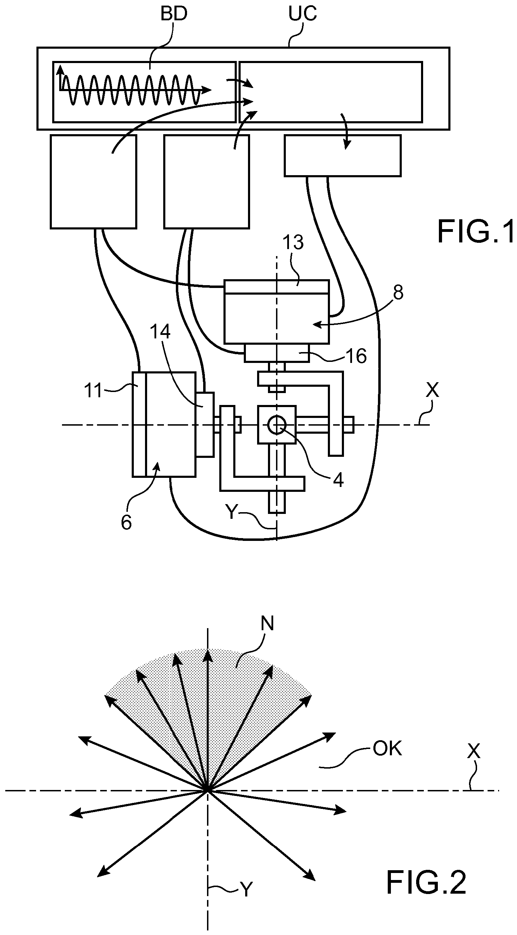

Sur la figure 1, on peut voir une représentation schématique d'un exemple d'interface haptique selon l'invention.

L'interface haptique comporte un élément d'interaction 4 avec un utilisateur ou effecteur articulé sur un bâti et au moins deux freins 6, 8. L'effecteur est relié mécaniquement aux freins 6, 8 de sorte à avoir au moins deux degrés de liberté. Les freins sont aptes à appliquer un couple de freinage autour des axes X et Y respectivement.

L'interface haptique comporte également au moins un capteur de position 14, 16 de l'effecteur et au moins un capteur de l'intention d'action de l'utilisateur 11, 13 qui détecte l'effort exercé par l'utilisateur sur l'effecteur, et une unité de commande UC ou contrôleur comportant une base de données BD de motifs haptiques et qui est apte à envoyer des ordres aux freins pour reproduire un motif haptique sur la base de la position de l'effecteur, de l'effort exercé sur l'effecteur 4 et éventuellement des informations extérieures. Le capteur de l'intention d'action de l'utilisateur détecte au moins la direction de l'effort.

En connaissant la position de l'effecteur et la direction de l'effort l'unité de commande peut assurer un guidage de l'effecteur efficace et offrant un bon ressenti haptique pour l'utilisateur.

Sur la figure 2, on peut voir une vue de dessus de différentes directions pouvant être prises par l'effecteur, une zone de déplacement autorisée désignée par OK et une zone de déplacement interdite désignée par N. En connaissant la direction de l'effort appliqué sur l'effecteur par l'utilisateur, l'unité de commande peut générer des ordres aux freins pour qu'ils bloquent des directions données, les ordres étant envoyés très rapidement et la réponse des freins étant très rapide, l'utilisateur n'a pas conscience de l'activation/désactivation des freins respectivement sur chaque axe X et Y.

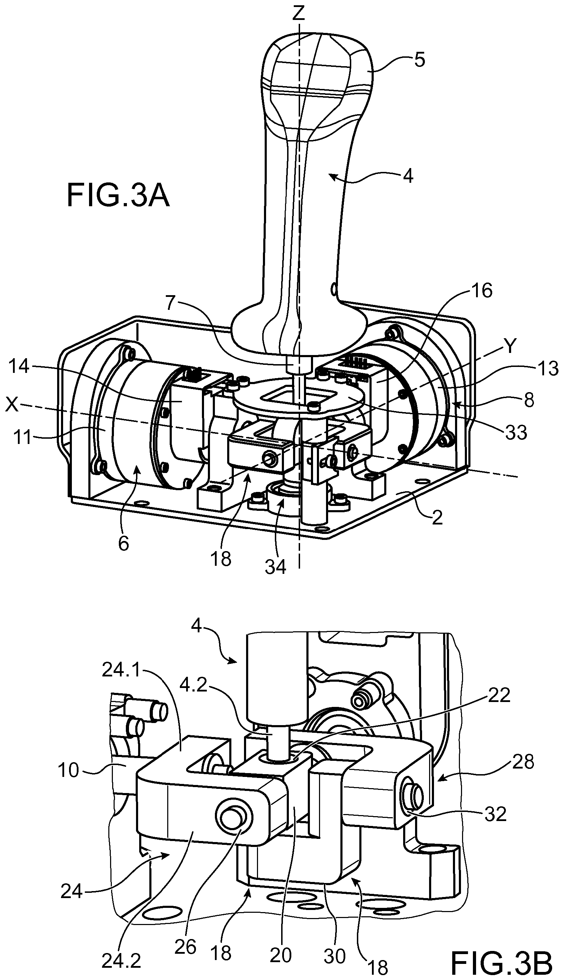

Sur les figures 3A et 3B, on peut voir un exemple pratique d'interface haptique à deux degrés de liberté selon l'invention. Il sera compris que cet exemple n'est en aucun cas limitatif comme cela sera décrit dans la suite de la description.

L'effecteur 4 a dans l'exemple représenté à la forme d'une manette s'étendant en position repos le long d'un axe longitudinal Z perpendiculaire sensiblement au plan du bâti 2 et comporte une première extrémité longitudinale destinée à être saisie par la main de l'opérateur et équipée par exemple d'un pommeau 5 et une deuxième extrémité longitudinale connectée mécaniquement aux freins. Le pommeau est monté sur une tige 7 comportant la deuxième extrémité longitudinale 4.2.

Dans l'exemple représenté, le frein 6 est orienté le long d'un axe X et le frein 8 est orienté le long d'un axe Y perpendiculaire à l'axe X et tous deux perpendiculaires à l'axe Z. Les axes X et Y définissent un plan parallèle au plan du bâti. Le frein 6 comporte un arbre 10 (figure 3B)) s'étendant le long de l'axe X et le frein 8 comporte un arbre (non visible) s'étendant le long de l'axe Y.

Dans l'exemple représenté, les deux freins 6 et 8 ont des structures similaires, seul le frein 6 sera décrit en détail. Il sera compris qu'une interface haptique comportant des freins de structures différentes ne sort pas du cadre de la présente invention. Les freins magnétorhéologiques présentent l'avantage de présenter un coût relativement faible et un faible encombrement tout en présentant une grande dynamique de couple de freinage et un temps de réponse rapide.

Un exemple de frein est par exemple dans le document WO2016/050717A1. Le frein 6 comporte un arbre 10 mobile en rotation autour de l'axe X et monté dans un boîtier. L'arbre 10 comporte une extrémité connectée mécaniquement à la deuxième extrémité 4.2 de la manette 4 et une deuxième extrémité (non visible) interagissant avec une fluide magnétorhéologique. La deuxième extrémité de l'arbre est par exemple solidaire en rotation d'une jupe disposée dans une chambre remplie de fluide magnétorhéologique. Le frein comporte également des moyens pour générer un champ magnétique dans la chambre de sorte à provoquer une modification de la viscosité apparente du fluide magnétorhéologique. Lorsque la viscosité augmente, un couple résistant s'applique sur la jupe et sur l'arbre 10, et de fait sur la manette via la connexion mécanique entre l'arbre 10 et la manette 4.

Dans l'exemple représenté, l'interface comporte des capteurs de positions angulaires 14 et 16 mesurant la position angulaire des arbres des freins 6, 8. Il peut s'agir par exemple de codeurs optiques incrémentaux ou de codeurs magnétiques.

Le capteur d'intention d'action de l'utilisateur détermine au moins la direction de l'effort appliqué par l'utilisateur sur la manette de sorte à identifier son intention avant qu'un changement de position de la manette soit effectivement détecté.

Dans la suite de la description, le capteur d'intention sera désigné capteur de force ou capteur de couple à des fins de simplicité.

Pour déterminer l'effort exercé sur la manette, on peut détecter les couples autour des axes X et Y au niveau des freins 6 et 8.

Dans l'exemple représenté, chaque frein 6, 8 comporte un capteur de couple 11, 13 respectivement au niveau des freins 6, 8. Un exemple d'un tel capteur est décrit dans le document WO2016/050717A1. Il comporte par exemple un corps d'épreuve dont la déformation provoquée par le couple appliqué par l'utilisateur est détectée par des capteurs d'effort. Le corps d'épreuve peut être fixé par une extrémité au bâti de l'interface et par une autre extrémité au frein magnétorhéologique, par exemple le boîtier 8. Les capteurs d'effort sont en contact avec le corps d'épreuve au niveau de son extrémité solidarisée au boîtier du frein.

Le corps d'épreuve peut comporter un corps de forme cylindrique à section circulaire. Le corps d'épreuve est par exemple en matériau plastique, tel que l'ABS.

Lorsqu'un couple est appliqué sur l'arbre du frein 6, celui-ci provoque une déformation par torsion du corps d'épreuve par l'intermédiaire du boitier du frein lui-même en interaction avec le fluide, lui-même en interaction avec la jupe qui est liée à l'arbre. Cette déformation est détectée par les capteurs d'effort.

Le matériau du corps d'épreuve et sa géométrie peuvent être déterminés en fonction du couple minimal et du couple maximal appliqués, de la sensibilité des capteurs d'effort et du seuil de détection souhaité. En outre, la déformation du corps d'épreuve est telle qu'elle n'est pas perceptible par l'utilisateur. Par exemple, on peut considérer qu'une déformation du corps d'épreuve de quelques microns n'est pas perceptible par l'utilisateur.

Alternativement, on peut mesurer les efforts directement sur le boîtier ou sur l'arbre rotatif, pour cela un capteur de couple serait mis en œuvre.

Le capteur d'effort est par exemple réalisé à l'aide d'éléments piézorésistifs assemblés sous la forme d'un pont de Wheatstone, ils permettent une sensibilité de l'ordre de quelques dizaines de mV par Newton avec une raideur suffisamment élevée pour limiter le déplacement à quelques dizaines de microns à pleine charge. En variante, le ou les capteurs d'effort pourraient être remplacés par un ou des capteurs de déformation formés, par exemple, par des jauges de contrainte directement appliquées sur le corps d'épreuve pour détecter sa déformation.

En connaissant les couples autour des directions X et Y, il est possible de déterminer l'effort appliqué à la manette.

En variante et de manière préférée, on peut détecter directement l'effort au niveau de la manette, ce qui permet d'obtenir une mesure plus précise de l'effort appliqué par l'utilisateur.

Le ou les capteurs liés directement à l'effecteur et le ou les capteurs de couple disposés au niveau des freins peuvent être par exemple piézorésistifs, piézoélectriques, capacitifs, magnétiques ou optiques.

De préférence, le capteur présente une grande sensibilité et une grande rigidité, de sorte à ce qu'il ne perturbe pas ou peu le ressenti de l'utilisateur.

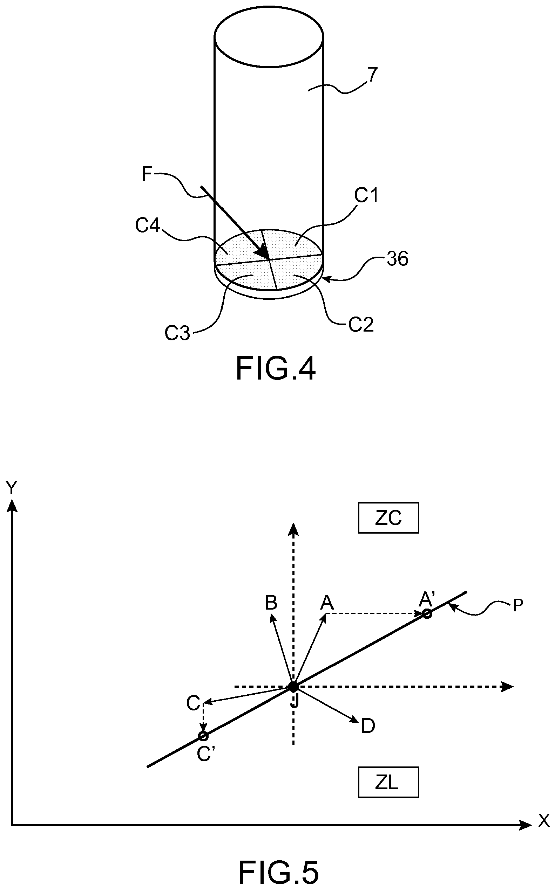

La figure 4 représente un exemple de capteur capacitif 36 lié mécaniquement à l'effecteur. F désigne la force exercée sur l'effecteur 4.

Le capteur d'effort comporte une matrice polymère qui est destinée à être déformée par l'effort exercé par l'utilisateur sur l'effecteur. Pour cela le capteur peut être positionné, par exemple pincé, entre la partie supérieure de l'effecteur 4 qui est manipulé par l'utilisateur, et la partie inférieure de l'effecteur liée à l'axe 7, de manière à subir les efforts d'interaction entre l'effecteur et les freins. Le capteur comporte par exemple quatre condensateurs C1, C2, C3, C4 en forme de quart de cercle. L'application d'un effort sur l'effecteur provoque une déformation de la matrice et donc une variation d'une ou de plusieurs capacités des condensateurs. En analysant quel(s) condensateur(s) a ou ont vu sa ou leur capacité variée et dans quelle proportion, il est possible de déterminer la direction et l'amplitude de l'effort appliqué par l'utilisateur sur l'effecteur.

En variante, on pourrait utiliser des capteurs multiaxes à jauge de contraintes développés par exemple par la société ATI. Ces capteurs utilisent des jauges de contraintes piézorésistives associées à une électronique adaptée pour mesurer des efforts dans plusieurs directions. Des capteurs multiaxes basés sur la détection optique proposés par la société Optoforce et des capteurs multiaxes piézoélectriques proposés par la société Kistler peuvent également être utilisés.

Les deux freins sont assemblés en parallèle par une connexion mécanique 18 entre la manette 4 et les arbres. Il s'agit d'un système à cardans bien connu de l'homme du métier dont un exemple non limitatif est représenté sur les figures 3A et 3B.

Dans l'exemple représenté, l'extrémité 4.2 de la manette 4 est montée dans une pièce 20 au moyen d'un pivot glissant 22. L'arbre 10 est relié à la pièce 20 par une pièce 24 en forme de L, une branche 24.1 du L étant solidaire de l'arbre 10 et l'autre branche 24.2 du L étant articulée sur la pièce 20 par un pivot glissant 26.

L'arbre 10 du frein 8 est connecté à la pièce 20 via deux pièces en L 28, 30. Les deux pièces en L 28, 30 sont articulées entre L par une liaison pivot glissant 32, la pièce en L 28 est articulée en rotation sur l'arbre du frein 8 et la pièce en L 30 est solidaire en rotation sur la pièce 20.

L'interface comporte des butées pour limiter le déplacement dans le plan X et Y de la manette, dans l'exemple représenté les butées sont formées par un cadre 33 disposé autour de la manette au-dessus de l'articulation à cardans.

De manière avantageuse, l'interface comporte des moyens 34 de rappel en position repos, i.e. la manette coaxiale l'axe Z. Ces moyens sont par exemple de type magnétique disposés entre le bâti 2 et l'articulation à cardans. Il s'agit par exemple de deux aimants permanents alignés avec l'axe Z, l'un étant porté par le bâti et l'autre par le système à cardans et exerçant une force magnétique de rappel. En variante, un système de rappel à ressort pourrait être utilisé, néanmoins il pourrait induire des frottements.

La manette peut alors être déplacée autour des deux axes X et Y et les freins 6, 8 sont aptes à appliquer des couples résistants autour de ses axes en fonction de la position de la manette et/ou de l'intention d'action de l'utilisateur.

D'une part, toute autre articulation entre la manette et les freins permettant de réaliser une interface à au moins deux degrés de liberté entre dans le cadre de la présente invention, telle celle décrite par exemple dans le document Bin Liu. Development of 2d haptic devices working with magnetorheological fluids. Master's thesis, University of Wollongong, Australia, 2006 ou dans le document A. Milecki, P. Bachman, and M. Chciuk. Control of a small robot by haptic joystick with magnetorheological fluid. Mechatron. Syst. Mater.-MSM, 7, 2011*.*

D'autre part, la structure de freins pourrait être différente. Au lieu d'une jupe, par exemple un disque pourrait interagir avec le fluide magnétorhéologique. Par ailleurs, le frein pourrait être de type électrorhéologique ou électromagnétique. Il peut également être envisagé d'utiliser des actionneurs ultrasoniques utilisant le principe de lubrification ultrasonique. De tels actionneurs utilisent par exemple des céramiques piézoélectriques mises en vibration. Contrairement aux freins magnétorhéologiques et électrorhéologiques, les actionneurs ultrasoniques présentent un effort résistant maximal lorsqu'aucun courant n'alimentent les actionneurs. Un frein ultrasonique pouvant être utilisé dans des dispositifs haptiques est par exemple décrit dans le document Koyama, Tatsuya, Kenjiro Takemura, and Takashi Maeno. "Development of an Ultrasonic Brake." Journal of Advanced Mechanical Design, Systems, and Manufacturing 1, no. 1 (2007): 122-129*.*

De plus, les axes des freins pourraient ne pas être perpendiculaires. En outre, l'interface pourrait comporter plus de deux freins, par exemple elle pourrait comporte trois axes à 120°, chacune étant muni d'un frein

La structure pourrait être à trois degrés de liberté angulaire.

Par ailleurs, des systèmes d'amplifications mécaniques, par exemple à cabestans ou à engrenages pourraient être utilisés pour renforcer les sensations de butée ou réduire l'encombrement.

On pourrait également envisager que l'effecteur 4 soit mobile le long de l'axe Z offrant un troisième degré de liberté. L'effecteur 4 pourrait également être contrôlé en rotation autour de l'axe Z.

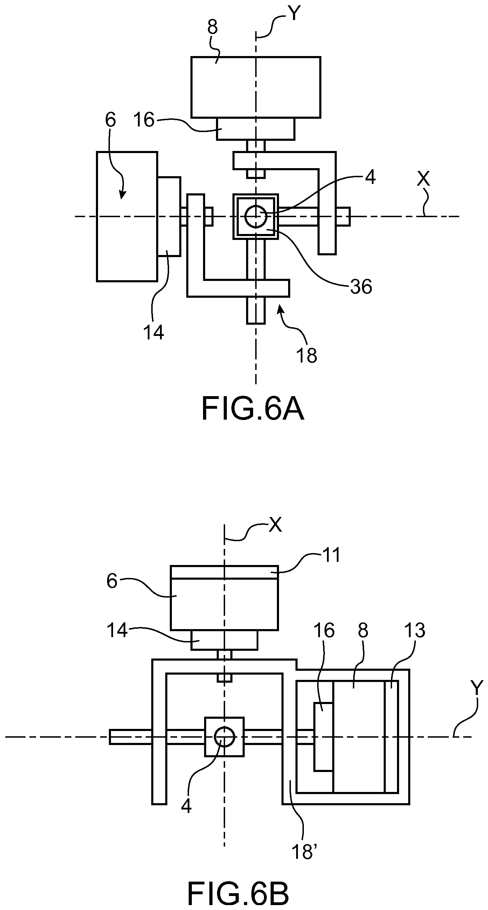

Sur les figures 6A et 6B, on peut voir d'autres exemples de réalisation d'une interface à deux degrés de liberté selon l'invention. Les mêmes références que celles utilisées pour les figures 3A et 3B sont utilisées pour les figures 6A et 6B.

Sur la figure 6A, la structure de la connexion à cardans est similaire à la structure de l'interface des figures 3A et 3B, mais le capteur d'intention d'action de l'utilisateur est lié à l'effecteur 4 et comporte un capteur d'effort 36 mesurant directement l'effort appliqué sur l'effecteur 4.

Sur la figure 6B, les deux freins sont assemblés en série par une connexion à cardans 18', l'intention d'action est obtenue grâce aux mesures des couples au niveau des freins comme pour l'interface des figures 3A et 3B.

Un exemple de fonctionnement de l'interface va maintenant être décrit.

L'utilisateur saisit la manette et la déplace. Le ou les capteurs de position mesurent la position de la manette autour des axes X et Y et le ou les capteurs d'intention détectent au moins la direction de la force exercée par l'utilisateur sur la manette. Les informations sont traitées par une unité de commande qui envoie des ordres aux freins de générer une résistance donnée autour des axes X et Y suivant des motifs haptiques prédéterminés à reproduire en fonction de la position de la manette. Le vecteur vitesse de déplacement (direction et amplitude) de la manette et/ou le vecteur accélération (direction et amplitude) peuvent également être pris en compte, celles-ci peuvent être obtenues en dérivant les mesures faites par le capteur de position.

Des champs électromagnétiques sont générés dans les freins provoquant une augmentation de la viscosité du fluide magnétorhéologique.

Les freins magnétorhéologiques et électrorhéologiques présentent un temps de réponse très court, de l'ordre de quelques millisecondes, et une grande dynamique d'effort résistif. Ils peuvent alors produire une grande variété de motifs haptiques.

Les freins peuvent simuler des butées, indiquant par exemple à l'utilisateur qu'il a atteint une configuration limite qu'il n'a pas le droit de dépasser, des crans reprogrammables avec différentes fréquences spatiales et différentes formes, par exemple rectangulaires, sinusoïdales, triangulaires, une résistance variable... les motifs haptiques peuvent être tels qu'ils assurent un guidage de la manette dans une direction donnée.

Comme indiqué ci-dessus, le contrôle des freins est réalisé sur la base de l'état d'actionnement de la manette, i.e. sur la base de sa position et au moins de la direction de l'effort appliqué par l'utilisateur sur la manette. L'unité de commande peut également tenir compte de la direction et de l'amplitude du vecteur vitesse, et/ou de la direction et de l'amplitude du vecteur accélération de déplacement de la manette et/ou de l'amplitude de l'effort appliqué sur la manette.

Grâce aux informations fournies sur la direction de l'effort appliqué à la manette, il est possible de guider la manette suivant des trajectoires complexes.

Une représentation graphique d'un exemple de guidage est représentée sur la figure 5.

On souhaite par exemple réaliser une butée virtuelle de la manette suivant un plan P en diagonale représenté en grisé sur la figure 5. La zone ZL située en dessous du plan P est libre, i.e. aucune action des freins ne limite le déplacement de la manette et la zone ZC située au-dessus du plan P est contrôlée, i.e. l'unité de commande contrôle les freins pour qu'ils appliquent des efforts résistants sur la manette.

Les informations fournies par les capteurs de position permettent de déterminer la position de la manette. Si la manette se trouve dans la zone libre ZL, aucun ordre d'activation des freins n'est donné, la manette peut être déplacée librement.

Si la manette se situe sur le plan de guidage P au point J, la direction de l'effort appliqué par l'utilisateur est déterminée à l'aide du ou des capteurs d'effort ou de couple.

Si l'effort détecté présente une direction tendant à provoquer un mouvement à l'intérieur de la zone contrôlée ZC (zone grisée sur la figure 5) en direction du point A, alors l'unité de commande envoie un ordre au frein 8 de bloquer le mouvement autour de l'axe Y et au frein 6 de relâcher tout effort autour de l'axe X. L'utilisateur est alors incité à rejoindre le point A' se situant sur le plan P.

Si l'effort détecté présente une direction tendant à provoquer un mouvement à l'intérieur de la zone contrôlée ZC en direction du point B, alors l'unité de commande envoie des ordres aux freins 6 et 8 de bloquer les mouvements autour des axes X et Y.

Si l'effort appliqué a une direction tendant à provoquer un mouvement à l'intérieur de la zone contrôlée ZC en direction du point C, alors l'unité de commande envoie un ordre au frein 6 de bloquer le mouvement autour de l'axe X et au frein 8 de relâcher tout effort résistant autour de l'axe Y, afin d'inciter l'utilisateur à rejoindre le point C'.

Si l'effort appliqué présente une direction tendant à provoquer un mouvement à l'extérieur de la zone contrôlée ZC en direction du point D, alors les freins X et Y sont relâchés.

De manière très avantageuse, on peut prévoir que l'intensité de l'effort résistant autour de l'une ou l'autre des directions dépende de la position de la manette par rapport au plan de guidage. Par exemple, il peut être prévu que plus la manette pénètre dans la zone contrôlée, plus les efforts appliqués par les freins sont importants. L'effet ressenti serait alors une « zone molle » de transition entre la zone libre et la zone contrôlée afin de signifier à l'utilisateur qu'il a franchi le plan P et qu'il est entré dans la zone contrôlée.

De manière très avantageuse, le ou les capteurs de force mesurent l'intensité de la force exercée par l'utilisateur. La résistance appliquée par le ou les freins peut être modulée en fonction de l'intensité de l'effort, ce qui permet d'offrir un guidage plus souple au lieu de la sensation de butée ou de mur qui n'aide pas au guidage. Le ressenti haptique est alors sensiblement amélioré.

Il sera compris que le plan pourrait être courbe, par exemple la zone contrôlée pourrait se situer à l'intérieur ou l'extérieur d'un cercle. En outre, il sera compris que la zone ZL pourrait être également une zone contrôlée, l'effecteur serait alors guidé le long du plan P ou le long d'une courbe par exemple un cercle. Par exemple la manette 4 pourrait, selon un motif haptique donné, n'être autorisée qu'à pivoter autour de l'axe Z le long d'une courbe fermé formant un cercle. Toute autre trajectoire est envisageable, elle peut combiner des portions droites de directions différentes, des portions courbes de courbure différentes, des portions droites et des portions courbes, etc.

Grâce à l'invention, on dispose d'une connaissance au plus tôt de la direction dans laquelle l'utilisateur a l'intention de déplacer la manette, permettant de commander les freins en conséquence. Le temps de réponse rapide des freins magnétorhéologiques et électrorhéologique permet une utilisation transparente vis-à-vis de l'utilisateur qui n'a pas conscience de l'activation des freins ce qui supprime les effets de « collage » et contribue à donner la sensation d'un dispositif mécanique et non d'un frein électromécanique.

La mesure de force permet notamment de réaliser plus facilement les motifs haptiques type butée ou roue libre dans lesquels le mouvement est bloqué quand l'utilisateur exerce une force vers une direction précise. Cela permet au contrôleur de prendre des décisions d'actionnement sans que l'effecteur ait bougé, il est ainsi possible, comme montré dans l'image ci-dessous, de bloquer le déplacement suivant une certaine plage angulaire comme représentée sur la figure 2.

En outre en utilisant des freins très réactifs, on obtient un guidage très fin de l'effecteur.

Le temps de réaction du système magnéto rhéologique est inférieur à 10 ms, de préférence de l'ordre de quelques millisecondes, par exemple entre 3 ms et 5 ms.

Dans le cas de frein utilisant une technologie de lubrification acoustique, le temps de réaction peut être inférieur à 1 ms. Par exemple le temps de boucle global (mesure + actionnement) peut être inférieur à 10 ms. En considérant uniquement la mesure, une fréquence de 1kHz peut être choisie, ce qui correspondant à 1ms entre 2 mesures.

Grâce à l'invention, on dispose d'une interface haptique qui, à la fois, offre un guidage de l'effecteur efficace et ayant un bon ressenti haptique et assure la sécurité de l'utilisateur, car elle met en œuvre des freins passifs contrairement aux interfaces haptiques mettant en œuvre des moteurs électriques.

Une interface haptique selon l'invention peut être utilisée dans le domaine automobile pour équiper un tableau de bord et commander différentes fonctions sans requérir une attention visuelle de l'utilisateur, dans le domaine aéronautique, dans le domaine des commandes à distance, dans le domaine des jeux vidéo.

## Revendications

1. Interface haptique à au moins deux degrés de liberté comportant :
- au moins un élément d'interaction (4) avec un utilisateur,
- au moins deux freins passifs (6, 8) s'étendant chacun le long d'un axe (X, Y), chacun des freins (6, 8) étant apte à exercer un effort résistant autour de son axe (X, Y), lesdits efforts étant commandables,
- des moyens de mesure (14, 16) d'une position de l'élément d'interaction (4) avec un utilisateur,
- des moyens de détection (11, 13) de l'intention d'action de l'utilisateur sur l'élément d'interaction (4) avec l'utilisateur, les moyens de détection (11, 13) comportant au moins un capteur d'effort (36) lié à l'élément d'interaction (4) avec l'utilisateur, le capteur (36) déterminant au moins une direction de l'effort appliqué par l'utilisateur sur l'élément d'interaction (4) avec un utilisateur de sorte à déterminer son intention avant qu'un déplacement de l'élément d'interaction (4) ne soit détecté,
- une unité de commande (UC) apte à envoyer des ordres audits freins en fonction des informations sur la position de l'élément d'interaction avec l'utilisateur et sur l'intention d'action de l'utilisateur, de sorte que lesdits freins passifs (6, 8) génèrent des efforts résistants selon au moins un motif haptique donné.

2. Interface haptique selon la revendication 1, dans laquelle des moyens de détection (11, 13) de l'intention d'action de l'utilisateur sur l'élément d'interaction (4) avec l'utilisateur détectent la direction d'un effort appliqué sur l'élément d'interaction (4) avec l'utilisateur.

3. Interface haptique selon la revendication 2, dans laquelle des moyens de détection (11, 13) de l'intention d'action de l'utilisateur sur l'élément d'interaction (4) avec l'utilisateur mesurent l'intensité de l'effort.

4. Interface haptique selon la revendication 1, 2 ou 3, dans laquelle le capteur d'effort (36) est un capteur capacitif en contact avec l'élément d'interaction (4) avec l'utilisateur et comporte au moins plusieurs condensateurs à capacité variable, dont la capacité varie en fonction au moins de la direction de l'effort appliqué sur l'élément d'interaction avec l'utilisateur.

5. Interface haptique selon l'une des revendications 1 à 4, dans laquelle les moyens de détection de l'intention d'action de l'utilisateur sur l'élément d'interaction (4) avec l'utilisateur comportent un capteur au niveau de chaque frein, chacun desdits capteurs étant apte à détecter les couples exercés autour d'un des axes.

6. Interface haptique selon l'une des revendications 1 à 5, dans laquelle les freins passifs (6, 8) comprennent un fluide dont la viscosité apparente varie en fonction d'un stimulus extérieur, par exemple un fluide magnétorhéologique, et un système de génération dudit stimulus extérieur sur commande dans ledit fluide, et un élément d'interaction avec le fluide disposé dans le fluide et connecté mécaniquement à l'élément d'interaction (4) avec l'utilisateur.

7. Interface haptique selon l'une des revendications 1 à 6, dans laquelle l'élément d'interaction avec l'utilisateur (4) et les freins passifs (6, 8) sont connectés mécaniquement par une articulation à cardans (18, 18').

8. Interface haptique selon l'une des revendications 1 à 7, comportant des moyens de rappel magnétiques (34) de l'élément d'interaction (4) avec l'utilisateur dans une position repos.

9. Procédé de commande d'une interface haptique selon l'une des revendications 1 à 8, dans lequel, lorsque l'unité de commande (UC) applique un motif haptique de guidage de l'élément d'interaction (4) avec l'utilisateur au moins le long d'un côté d'un plan donné, l'unité de commande :
- détermine la position de l'élément d'interaction (4) avec l'utilisateur,
- détermine au moins la direction de l'effort appliqué sur l'élément d'interaction (4) avec l'utilisateur avant qu'un déplacement de l'élément d'interaction (4) ne soit détecté,
- envoie des ordres aux freins passifs (6, 8) de sorte que les efforts résistants générés incitent l'utilisateur à se rapprocher du plan.

10. Procédé de commande selon la revendication 9, dans lequel l'intensité de l'effort appliqué sur l'élément d'interaction (4) avec l'utilisateur est mesurée et les intensités des efforts résistants appliqués par les freins passifs (6, 8) sont dépendantes de l'intensité de l'effort.

11. Procédé de commande selon la revendication 9 ou 10, dans lequel l'élément d'interaction (4) avec l'utilisateur n'est guidé que d'un côté du plan et dans lequel les intensités des efforts résistants appliqués par les freins passifs (6, 8) sont dépendantes de la position de l'élément d'interaction (4) avec l'utilisateur par rapport au plan, de sorte à fournir un ressenti haptique à l'utilisateur lors du franchissement du plan.

## Patentansprüche

1. Haptische Schnittstelle mit mindestens zwei Freiheitsgraden, enthaltend:
- mindestens ein Element zur Interaktion (4) mit einem Benutzer,
- mindestens zwei passive Bremsen (6, 8), die sich jeweils entlang einer Achse (X, Y) erstrecken, wobei jede der Bremsen (6, 8) geeignet ist, um eine Widerstandskraft um ihre Achse (X, Y) auszuüben, wobei die Kräfte steuerbar sind,
- Mittel zum Messen (14, 16) einer Position des Elements zur Interaktion (4) mit einem Benutzer,
- Mittel zum Erfassen (11, 13) der Absicht der Aktion des Benutzers auf das Element zur Interaktion (4) mit dem Benutzer, wobei die Erfassungsmittel (11, 13) mindestens einen Kraftsensor (36) enthalten, der an das Element zur Interaktion (4) mit dem Benutzer angeschlossen ist, wobei der Sensor (36) mindestens eine Richtung der Kraft bestimmt, die durch den Benutzer auf das Element zur Interaktion (4) mit einem Benutzer ausübt wird, um seine Absicht zu bestimmen, bevor eine Bewegung des Element zur Interaktion (4) erfasst wird,
- eine Steuereinheit (UC), die geeignet ist, um Befehle an die Bremsen zu senden in Abhängigkeit der Informationen über die Position des Elements zur Interaktion mit dem Benutzer und über die Aktionsabsicht des Benutzers, so dass die passiven Bremsen (6, 8) Widerstandskräfte erzeugen gemäß mindestens einem gegebenen haptischen Muster.

2. Haptische Schnittstelle nach Anspruch 1, wobei Mittel zum Erfassen (11, 13) der Absicht der Aktion des Benutzers auf das Element zur Interaktion (4) mit dem Benutzer die Richtung einer Kraft erfassen, die auf das Element zur Interaktion (4) mit dem Benutzer ausgeübt wird.

3. Haptische Schnittstelle nach Anspruch 2, wobei die Mittel zum Erfassen (11, 13) der Absicht der Aktion des Benutzers auf das Element zur Interaktion (4) mit dem Benutzer die Intensität der Kraft messen.

4. Haptische Schnittstelle nach Anspruch 1, 2 oder 3, wobei der Kraftsensor (36) ein kapazitiver Sensor ist, der mit dem Element zur Interaktion (4) mit dem Benutzer in Kontakt steht und mindestens mehrere Kondensatoren mit variabler Kapazität enthält, deren Kapazität in Abhängigkeit von mindestens der Richtung der Kraft variiert, die auf das Element zur Interaktion mit dem Benutzer ausgeübt wird.

5. Haptische Schnittstelle nach einem der Ansprüche 1 bis 4, wobei die Mittel zum Erfassen der Absicht der Aktion des Benutzers auf das Element zur Interaktion (4) mit dem Benutzer einen Sensor im Bereich jeder Bremse enthalten, wobei jeder der Sensoren geeignet ist, um die Drehmomente zu erfassen, die um eine der Achsen ausgeübt werden.

6. Haptische Schnittstelle nach einem der Ansprüche 1 bis 5, wobei die passiven Bremsen (6, 8) ein Fluid umfassen, dessen scheinbare Viskosität in Abhängigkeit von einem äußeren Stimulus variiert, beispielsweise ein magnetorheologisches Fluid, und ein System zur Erzeugung des gesteuerten äußeren Stimulus auf das Fluid, und ein Element zur Interaktion mit dem Fluid, das im Fluid angeordnet ist und mechanisch mit dem Element zur Interaktion (4) mit dem Benutzer verbunden ist.

7. Haptische Schnittstelle nach einem der Ansprüche 1 bis 6, wobei das Element zur Interaktion (4) mit dem Benutzer und die passiven Bremsen (6, 8) durch ein Kardangelenk (18, 18') mechanisch verbunden sind.

8. Haptische Schnittstelle nach einem der Ansprüche 1 bis 7, Mittel zur magnetischen Rückstellung (34) des Elements zur Interaktion (4) mit dem Benutzer in eine Ruheposition enthaltend.

9. Verfahren zum Steuern einer haptischen Schnittstelle nach einem der Ansprüche 1 bis 8, wobei, wenn die Steuereinheit (UC) ein haptisches Muster zur Führung des Elements zur Interaktion (4) mit dem Benutzer mindestens entlang einer Seite einer gegebenen Ebene anwendet, die Steuereinheit:
- bestimmt die Position des Elements zur Interaktion (4) mit dem Benutzer,
- bestimmt mindestens die Richtung der Kraft, die auf das Element zur Interaktion (4) mit dem Benutzer ausgeübt wird, bevor eine Bewegung des Elements zur Interaktion (4) erfasst wird,
- sendet Befehle an die passiven Bremsen (6, 8), so dass die erzeugten Widerstandskräfte den Benutzer dazu veranlassen, sich der Ebene zu nähern.

10. Steuerverfahren nach Anspruch 9, wobei die Intensität der Kraft, die auf das Element zur Interaktion (4) mit dem Benutzer ausgeübt wird, gemessen wird, und die Intensität der Widerstandskräfte, die von den passiven Bremsen (6, 8) ausgeübt werden, von der Intensität der Kraft abhängt.

11. Steuerverfahren nach Anspruch 9 oder 10, wobei das Element zur Interaktion (4) mit dem Benutzer nur auf einer Seite der Ebene geführt wird, und wobei die Intensitäten der Widerstandskräfte, die von den passiven Bremsen (6, 8) ausgeübt werden, von der Position des Elements zur Interaktion (4) mit dem Benutzer relativ zur Ebene abhängen, um dem Benutzer beim Überqueren der Ebene ein haptisches Empfinden zu vermitteln.

## Claims

1. A haptic interface with at least two degrees of freedom including:
- at least one element (4) for interaction with a user,
- at least two passive brakes (6, 8) each extending along an axis (X, Y), each of the brakes (6, 8) being capable of exerting a resistive force about the axis (X, Y) thereof, said forces being controllable,
- means (14, 16) for measuring a position of the element (4) for interaction with a user,
- means (11, 13) for detecting the user's intention to act on the element (4) for interaction with the user, the detection means (11, 13) including at least one force sensor (36) connected to the element (4) for interaction with the user, the sensor (36) determining at least one direction of the force applied by the user to the element (4) for interaction with a user so as to determine his intention before a displacement of the interaction element (4) is detected,
- a control unit (UC) capable of sending orders to said brakes depending on the information on the position of the element for interaction with the user and on the action intention of the user, such that said passive brakes (6, 8) generate resistive forces according to at least one given haptic pattern.

2. The haptic interface according to claim 1, wherein means for detecting (11, 13) the user's intention to act on the element (4) for interaction with the user detect the direction of a force applied to the element (4) for interaction with the user.

3. The haptic interface according to claim 2, wherein means (11, 13) for detecting the user's intention to act on the element (4) for interaction with the user measure the intensity of the force.

4. The haptic interface according to claim 1, 2 or 3, wherein the force sensor (36) is a capacitive sensor in contact with the element (4) for interaction with the user and includes at least several variable capacitance capacitors, whose capacitance varies depending on at least of the direction of the force applied to the element for interaction with the user.

5. The haptic interface according to one of claims 1 to 4, wherein the means for detecting the user's intention to act on the element (4) for interaction with the user include a sensor at each brake, each of said sensors being capable of detecting the torques exerted about one of the axes.

6. The haptic interface according to one of claims 1 to 5, wherein the passive brakes (6, 8) comprise a fluid whose apparent viscosity varies depending on an external stimulus, for example a magnetorheological fluid, and a system for generating said external stimulus on command in said fluid, and an element for interaction with the fluid arranged in the fluid and mechanically connected to the element (4) for interaction with the user.

7. The haptic interface according to one of claims 1 to 6, wherein the element for interaction with the user (4) and the passive brakes (6, 8) are mechanically connected by a cardan joint (18, 18').

8. The haptic interface according to one of claims 1 to 7, including magnetic means (34) for returning the element (4) for interaction with the user into a rest position.

9. A method for controlling a haptic interface according to one of claims 1 to 8, wherein, when the control unit (UC) applies a haptic pattern for guiding the element (4) for interaction with the user at least along one side of a given plane, the control unit:
- determines the position of the element (4) for interaction with the user,
- determines at least the direction of the force applied to the element (4) for interaction with the user before a displacement of the interaction element (4) is detected,
- sends orders to the passive brakes (6, 8) such that the resistive forces generated encourage the user to approach the plane.

10. The control method according to claim 9, wherein the intensity of the force applied to the element (4) for interaction with the user is measured and the intensities of the resistive forces applied by the passive brakes (6, 8) are dependent on the intensity of the force.

11. The control method according to claim 9 or 10, wherein the element (4) for interaction with the user is guided only on one side of the plane and wherein the intensities of the resistive forces applied by the passive brakes (6, 8) are dependent on the position of the element (4) for interaction with the user relative to the plane, so as to provide a haptic feeling to the user when crossing the plane.
